# EUROPEAN PATENT SPECIFICATION

(11) **EP 4 212 071 B1**
(45) Date of publication and mention of the grant of the patent: **10.07.2024**
(21) Application number: 23151068.6
(22) Date of filing: 11.01.2023
(51) Int. Cl.: A47J 31/36, A47J 31/44, A47J 31/52

(54) **MACHINE FOR DISPENSING COFFEE AND PROCESS THEREOF**
MASCHINE ZUR AUSGABE VON KAFFEE UND VERFAHREN DAFÜR
MACHINE DE DISTRIBUTION DE CAFÉ ET PROCÉDÉ ASSOCIÉ

(30) Priority: 12.01.2022 IT 202200000368
(43) Date of publication of application: 19.07.2023
(73) Proprietor: Fluid-O-Tech S.r.l., 20094 Corsico (MI) (IT)
(72) Inventor: TESSICINI, Fabrizio, 40026 Imola (BO) (IT); ANDREIS, Diego, 20145 Milano (MI) (IT)
(74) Representative: Cosenza, Simona

(56) References cited:
- EP-A1- 2 865 302
- EP-A1- 3 586 693
- EP-A1- 3 771 370
- WO-A1-2019/180252

## Description

The present invention refers to a machine for dispensing coffee and to a process for dispensing coffee by means of such a machine.

To date, the coffee industry is continuously expanding, both in the field of public premises, such as bar and restaurants, and in the field of home or professional environments, because of the wide diffusion of automatic machines for making coffee starting from grain coffee or coffee powder, both loose and in capsules or pods.

As known, the making of bar espresso coffee is performed by loading and pressing a dose of ground coffee powder in a glass-shaped filter having a microperforated bottom. By means of a filter holder, such filter is associated with a delivering group of a machine for dispensing espresso coffee. The espresso coffee is obtained by passing (i.e., percolating) pressurized hot water through the dose of coffee powder contained in the filter.

Coffee powder is generally obtained starting from coffee grains or beans ground by a coffee grinding device when making the espresso coffee, in order to preserve the aromas and the organoleptic properties of the coffee grains.

In case of automatic coffee machines, such as those generally installed in industries, stations, airports, offices, but also in home environments, the step of grinding the coffee grains and percolating pressurized hot water through the dose of coffee powder is performed in an automatized manner.

In case of disposable capsules or pods home coffee machines, the dose of coffee powder is actually contained in disposable capsules or pods, which are perforated and struck by pressurized hot water when dispensing coffee.

In all the above-mentioned machine typologies, the making of a good coffee is a complex technique depending on multiple factors:
- the quality of the coffee blend, in grains or already ground into powder;
- the grain size of the coffee powder;
- the correct quantity of coffee powder;
- the correct pressing and the homogeneous distribution of the coffee powder;
- the temperature, flow rate and pressure of the water percolating through the coffee powder;
- the duration of the step of percolating the water and dispensing the coffee;
- the quality of the water used for making the coffee.

Nowadays, in the various types of coffee machines mentioned above, there is no system able to appreciate, and possibly categorize and/or quantify, the quality of the coffee dispensed by the machine itself. Accordingly, it is not even possible to intervene on the above-listed parameters determining the making of a good coffee, on the basis of a data indicative of the actual quality of the coffee dispensed by the machine.

Indeed, in automatic coffee machines and in home-use coffee machines, the operating parameters of the same are generally pre-set during production, and eventually, for automatic coffee machines, re-calibrated if necessary.

Regarding bar coffee machines, the adjusting of the above-listed parameters is generally manually performed by the bartender, mainly on the basis of his/her experience.

In any case, to date, neither automatic-type coffee machines, nor bar coffee machines, nor capsule or pod coffee machines are able to perform quality checks on the dispensed coffee.

Indeed, to date, there are professional digital refractometers specifically suitable for analysing the coffee. Such instruments measure the refractive index of a number of drops of coffee (in the order of few millilitres), preferably at room temperature, to calculate the total quantity of soluble solids ("total dissolved solids," or IDS) present in the coffee. The measure lasts a few seconds. The TDS value of a sample of coffee is used as an index of the correct extraction of aromas and of the organoleptic substances from the coffee powder. Indeed, an under-extracted coffee does not have enough organoleptic properties, while the over-extraction involves the release of acid substances which are unpleasant to the taste.

Nowadays, the professional digital refractometers have high costs, in the order of hundreds of euros, and also for this reason are not particularly diffused. Furthermore, the operation of refractometric measuring is a complex operation, requiring the making of samples of coffee taken from the cup of coffee, suitably filtered, and brought to a balance temperature before performing the measuring itself. Moreover, the measuring does not provide an instantaneous value of the refractive index, when dispensing the coffee, but only represents an average value of the coffee present in cup.

Furthermore, it is now known that also the coffee cream, that is, the foam of air and coffee in liquid form, which is formed in the process of extracting the coffee and comes into view on the free surface of the coffee present in cup, provides indications about the quality of the coffee itself.

In this regard, the scientific article "Neglected Food Bubbles: The Espresso Coffee Foam" by Ernesto Illy and Luciano Navarini (Food Biophysics (2011) 6:335 - 348) should be cited. According to such article, the coffee cream volume, forming about 10% of the volume of the coffee in cup, the persistency and the consistency of the coffee cream are correlated to the carbon dioxide contents originally present in the grains of coffee toasted and suitably extracted when making the coffee, wherein such carbon dioxide plays a crucial role in determining the taste of the coffee. EP 2 865 302 A1 discloses a coffee machine comprising radiation sensors intercepting the temperature of outlet spouts of a filter holder in order to adjust the brewing parameters of the coffee machine.

The main task of the present invention consists in providing a machine for dispensing coffee which overcomes the limits of the known art, allowing to obtain an on-line measurement of the coffee quality.

In the scope of this main task, another object of the present invention is to provide a machine for dispensing coffee which allows to obtain a measurement of the coffee quality which considers both the quantity of solutes dissolved in the coffee and the features of the coffee cream.

Another object of the invention consists in providing a machine for dispensing coffee of which the operating parameters, such as for example temperature (and/or temperature profile) of the water, infusion pressure (and/or infusion pressure profile), flow rate (and/or flow rate profile) of the water, grain size of the coffee, quantity of coffee powder, powder distribution in the filter holder, water quality, are controllable on the basis of the actual quality of the coffee produced by the same, and that they are in real time.

Another object of the invention consists in that it is possible to detect the typology of coffee powder used for dispensing, for example distinguishing the Arabica from the Robusta.

Another object of the invention consists in that it is possible to also detect the typology of coffee blend present in the coffee capsules or pods, also detecting the time needed for perforating the capsule, so as to be able to select the optimal profiling/extracting parameters.

A further object of the invention consists in providing a machine for dispensing coffee which is able to give the widest guarantees about reliability and safety in use.

Still another object of the invention consists in providing a machine for dispensing coffee which is economically competitive if compared to the known art.

The task set forth above, as well as the mentioned objects and other which will better appear below, are achieved by a machine for dispensing coffee, as set forth in claim 1, by a sensorized filter holder as set forth in claim 12 as well as by a process for dispensing coffee as set forth in claim 13.

Other features are provided in the dependent claims.

Further features and advantages will be more apparent from the description of two preferred, but not exclusive, embodiments of a machine for dispensing coffee, illustrated by way of indication and without limitation with the aid of the attached drawings, in which:
figure 1 schematically illustrates a first embodiment of a machine for dispensing coffee, according to the invention;
figure 1A is a schematic sectional view of the coffee quality optical sensor represented in figure 1 taken along the axis IA-IA;
figure 2 schematically illustrates a second embodiment of a machine for dispensing coffee, according to the invention;
figure 3 illustrates a chart in which the curve of the voltage signal generated by the coffee quality optical sensor, while dispensing coffee through three different quantities of coffee powder, is reported;
figure 4 illustrates a chart in which the curve of the voltage signal generated by the coffee quality optical sensor, while dispensing coffee through two different coffee powder blends, is reported;
figure 5 illustrates a chart in which the curve of the voltage signal generated by the coffee quality optical sensor, while dispensing coffee through a quantity of coffee powder by two different pressings, is reported;
figure 6 illustrates a chart in which two curves of the voltage signal, suitably processed, generated by the optical sensor, representative of the step of forming the cream in two different coffee deliveries, are reported;
figure 7 schematically illustrates, in an exploded perspective view, a filter holder for bar machines for dispensing coffee to which a coffee quality optical sensor, according to the invention, is applied.

With reference to the cited figures, the machine for dispensing coffee, globally indicated by reference number 1, comprises:
- at least one pump 3;
- at least one heating device 6;
- at least one delivery group 5, wherein the pump 3 is adapted to send pressurized water to said at least one delivery group 5, and the heating device 6 is adapted to heat the water sent to said at least one delivery group 5;
- at least one container 7 of coffee powder which can be associated with the at least one delivery group 5;
- a dispensing opening 9 adapted to deliver, into a cup 60, coffee obtained by percolating pressurized heated water through a dose of coffee powder contained in the container 7, wherein said coffee comprises liquid coffee and coffee cream.

According to the invention, the machine 1 comprises, in proximity of the dispensing opening 9, a coffee quality optical sensor 100 adapted to intercept the coffee flow exiting the dispensing opening 9.

The optical sensor 100 comprises a radiation source 101 adapted to generate a radiation 103 which strikes the coffee flow exiting the dispensing opening 9 along an irradiation direction R incident to the exit direction of the coffee flow. The optical sensor 100 further comprises at least one front photodiode 105 placed substantially along said irradiation direction R on a side opposite to the radiation source 101 with respect to the coffee flow exiting the dispensing opening 9. Such at least one front photodiode 105 generates a first electrical signal depending on the part of radiation that crosses the coffee flow exiting the dispensing opening 9.

Still according to the invention, the machine 1 comprises a processing and control unit 15 connected to the optical sensor 100 and configured to receive the above-mentioned first electrical signal. Such processing and control unit 15 is adapted to process such first electrical signal and to generate:
- a signal indicative of the properties of the coffee cream present in the coffee flow exiting the dispensing opening 9, and/or
- a signal proportional to the extraction of coffee in the liquid coffee present in the coffee flow exiting the dispensing opening 9.

Preferably, such signal proportional to the extraction of coffee in the liquid coffee is a signal indicative of the quantity of soluble solids present in the liquid coffee exiting the dispensing opening 9 (that is, a signal indicative of the so-called TDS).

Advantageously, the properties of the coffee cream present in the coffee flow exiting the dispensing opening 9 comprise one or more of the following parameters:
(i) the volume percentage of the cream with respect to the overall volume of the delivered coffee;
(ii) the consistency of the cream, intended as the time needed for the cream to hold a certain mass of crystalline substance (e.g., sugar) before being passed through by the same;
(iii) the persistency of the cream, intended as the time needed for the liquid phase of the coffee to start appearing through the cream on the surface;
(iv) the time between the start and the end of the step of forming the cream from the coffee powder.

Advantageously, the processing and control unit 15 is adapted to combine the signal indicative of the consistency of the coffee cream and the signal proportional to the extraction of coffee in the liquid coffee part to calculate a quality index of the coffee prepared by the machine 1.

Advantageously, the radiation source 101 comprises a LED.

Advantageously, the radiation source 101 comprises a laser source 22, such as for example a semiconductor laser source comprising a laser cavity adapted to generate a radiation 103 defined by a laser light beam. In this case, the front photodiode 105 generates such first electrical signal, wherein such first electrical signal depends on the modulation of the power of the laser light beam operated, according to a retro-injection interferometry effect (so-called "self-mixing interferometry" effect), by the particles present in the coffee flow exiting the dispensing opening 9.

Using a LED radiation source 101 is particularly strong, while using a laser radiation source 101 allows to have a greater measurement resolution and precision, as far as also detecting the presence and quantity of particles in the order of micrometres present in the coffee flow.

Advantageously, the optical sensor 100 comprises a lateral photodiode 109 placed along a diffusion direction D incident to, and preferably substantially orthogonal to, the irradiation direction R. Such lateral photodiode 109 generates a second electrical signal depending on the part of radiation that is diffused by the coffee flow exiting the dispensing opening 9 along substantially such diffusion direction D.

Advantageously, the machine 1 can comprise both the front photodiode 105 and the lateral photodiode 109. The processing and control unit 15 connected to the optical sensor 100 is configured to receive both the first electrical signal from the front photodiode 105 and the second electrical signal from the lateral photodiode 109 and to process the signal indicative of the properties of the coffee cream and/or the signal proportional to the extraction of coffee, such as for example the signal indicative of the quantity of soluble solids present in the liquid coffee part, on the basis of a combination of the first electrical signal and the second electrical signal.

Advantageously, the optical sensor 100 comprises a radiation source 101 comprising a laser source 22, and a monitor photodiode 21 associated with the laser source 22.

Advantageously, the monitor photodiode 21 is integrated to the laser source 22 and disposed upstream of the laser cavity of the laser source 22.

The monitor photodiode 21 is adapted to generate an electrical signal depending itself on the modulation of the power of the laser light beam (so-called self-mix signal). In this case, the processing and control unit 15 is programmed also to process the electrical signal generated by the monitor photodiode 21 to improve the signal-noise ratio of the signals indicative of the properties of the coffee cream and/or of the extraction of coffee in the coffee liquid part.

Indeed, both the front photodiode 105 and the monitor photodiode 21 measure the amplitude modulations of the laser light beam induced by the self-mix effect. However, such modulations have opposite sign to each other. Thus, performing the difference between the two self-mix signals detected by the front photodiode 105 and the monitor photodiode 21 allows to obtain a factor-two gain on the self-mix signal amplitude, and furthermore a subtraction of all the common disturbances, such as noise and disturbances of the laser source power supplying, as well as the "shot-noises" and the "1/f" noise of the laser itself, is obtained.

Advantageously, the monitor photodiode 21 associated with the laser source is adapted to generate an electrical signal depending on the part of radiation that crosses the coffee flow exiting the dispensing opening 9. In other words, the monitor photodiode 21 can generate a signal equivalent to that generated by the front photodiode 105, and thus usable as an alternative to the signal generated by the front photodiode 105.

Advantageously, the optical sensor 100 can comprise one or more of: front photodiode 105, lateral photodiode 109, and monitor photodiode 21, so that the relative electrical signals can be sent and processed by the processing and control unit 15.

Preferably, in the most complete embodiment, il optical sensor 100 comprises all three of the above-mentioned photodiodes.

Advantageously, the processing of the above-mentioned signals indicative of the properties of the coffee cream and of the signal proportional to the extraction of coffee on the basis of the electrical signals generated by one or more of the photodiodes 105, 109 and 21 occurs by means of an algorithm loaded on the processing and control unit 15.

Advantageously, the processing and control unit 15 is configured to process the electrical signals generated by the front photodiode 105 (and/or the lateral photodiode 109 or the monitor photodiode 21) and to form a signal indicative of the flow rate of the coffee flow exiting the dispensing opening 9.

Advantageously, the optical sensor 100 can comprise a pair of front photodiodes 105 placed on a side opposite to the radiation source 101, at a determined distance to each other along the exiting direction of the coffee flow. Both such front photodiodes 105 intercept the part of radiation of the source 101 that crosses the coffee flow 7 exiting the dispensing opening 9 along irradiation directions R. The correlation of the electrical signals generated by the two front photodiodes 105 placed in a spatial sequence allows to estimate the speed of the coffee flow, and thus the flow rate of the same, in a very accurate manner.

Advantageously, the optical sensor 100 can comprise also a temperature sensor 155 configured to detect a signal indicative of the temperature of the delivered coffee, in proximity of the dispensing opening 9. Such temperature sensor 155 is connected to the processing and control unit 15, which is configured also to process, elaborate, and store such signal of temperature of the coffee.

Advantageously, the processing and control unit 15 is configured to adjust the operation of the pump 3 and/or of the heating device 6 on the basis of the signal indicative of the properties of the coffee cream part and/or of the signal proportional to the extraction of coffee in the coffee liquid part.

Indeed, both the formation of the cream and the extraction of coffee which are performed by means of percolating water through the coffee powder depend on the temperature, on the pressure and on the flow rate of the water, and vary as a function of the type and the features of the coffee used (e.g., as a function of the blend, grain size, pressing in the filter holder).

Advantageously, the machine for dispensing coffee 1 also comprises a pressure and/or flow rate sensor 53, connected itself to the processing and control unit 15, and adapted to generate a signal indicative of the pressure and/or of the flow rate of the water exiting the pump 3, usable by the processing and control unit 15 to vary the operating parameters of the pump 3.

Advantageously, the machine for dispensing coffee 1 also comprises a temperature sensor 55, connected itself to the processing and control unit 15, and adapted to generate a signal indicative of the temperature of the water downstream of the heating device 6, usable by the processing and control unit 15 to vary the operating parameters of the heating device 6 itself.

Advantageously, the processing and control unit 15 is configured to adjust the operation of the pump 3 and/or of the heating device 6 also on the basis of the signal of temperature of the coffee dispensed by the machine 1 itself and detected by the temperature sensor 155 integrated in the quality optical sensor 100, in proximity of the dispensing opening 9.

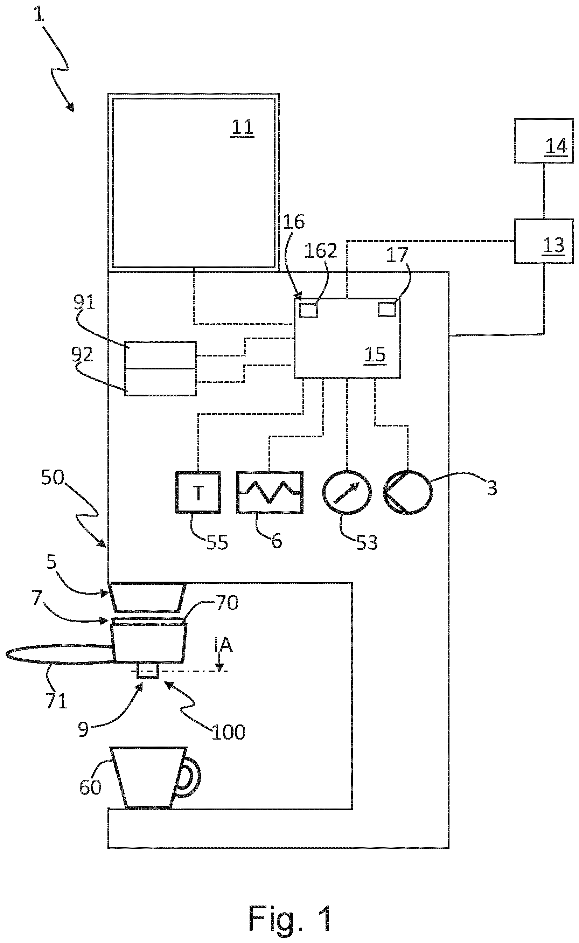

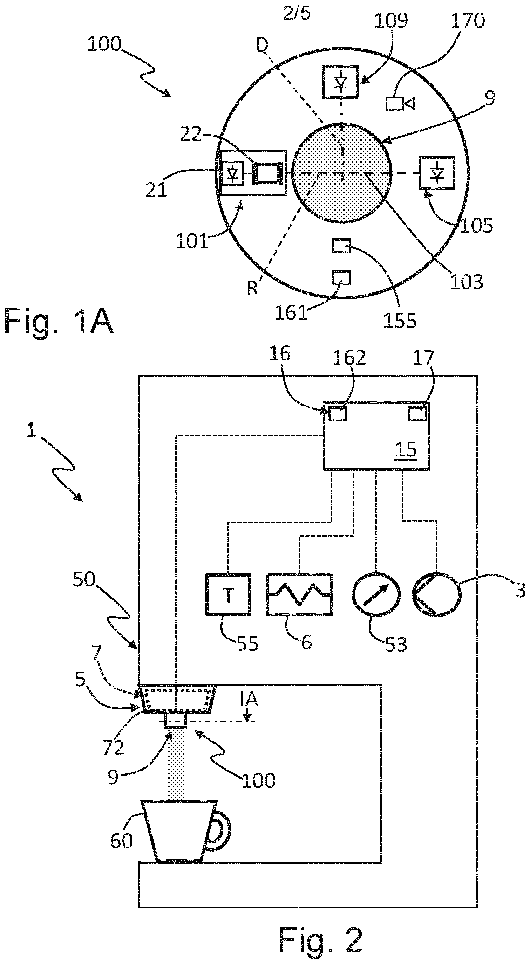

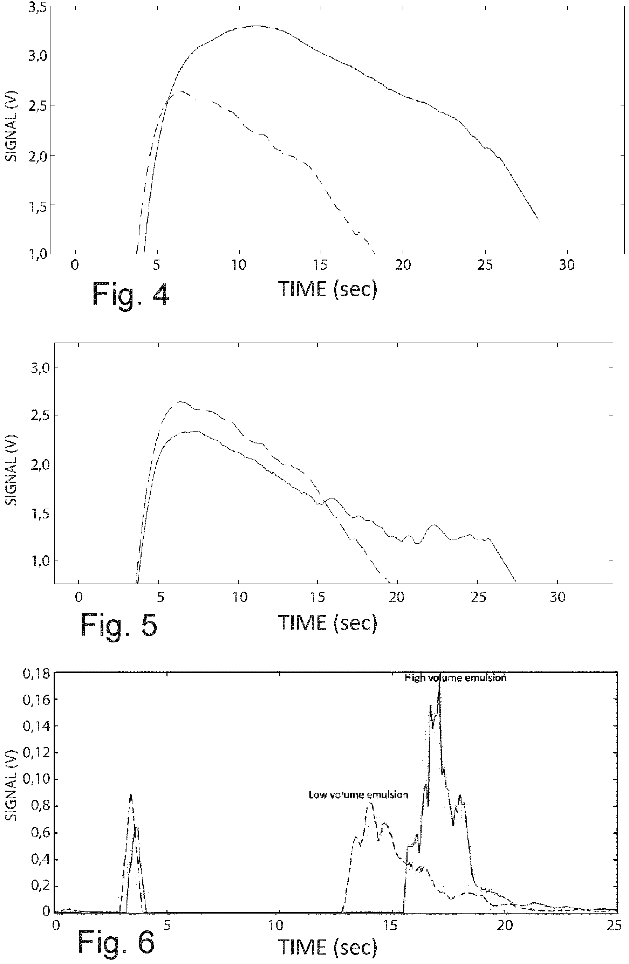

Advantageously, as illustrated with reference to the first embodiment in figures 1, 1A and 6, the machine 1 is a bar coffee machine and the container 7 of the coffee powder comprises a filter 70 adapted to receive the coffee powder. The filter 70 is adapted to be housed in a filter holder 71. The filter holder 71 can be associated in turn with the delivery group 5 to deliver a dose of espresso coffee into the cup 60. The dispensing opening 9 is formed in the filter holder 71 and the optical sensor 100 is associated with the filter holder 71 in proximity of the dispensing opening 9.

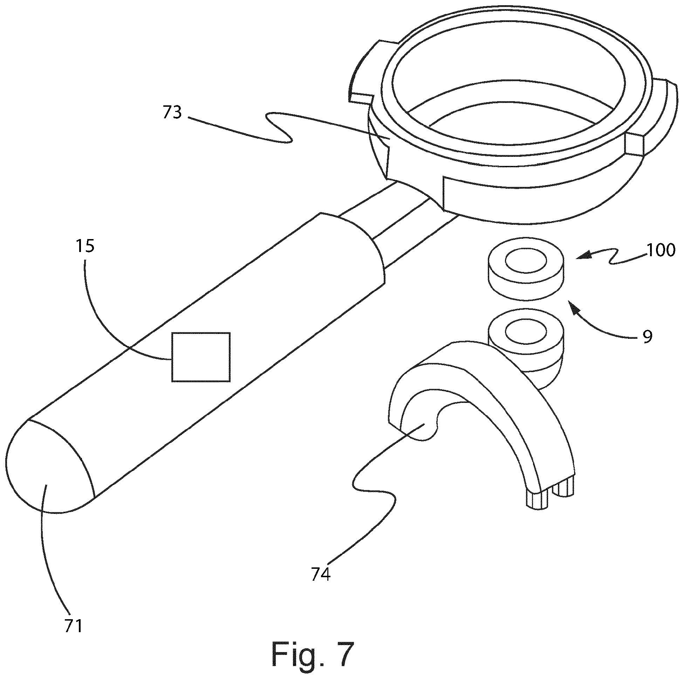

In figure 7 there is illustrated an example of filter holder 71.

As better explained in the following, the filter holder 71 can be a filter holder specifically associated to a coffee machine 1, or can be a sensorized filter holder 71, provided with an own processing and control unit 15, usable as a measuring instrument.

In both the examples, the optical sensor 100 is disposed between the containing body 73 of the filter 70 (not illustrated) and the delivering nozzle 74, eventually double, which the coffee flow exits, so as to intercept the coffee flow passing through the dispensing opening 9, intended as the through hole connecting the bottom of the containing body 73 of the filter 70 and the actual delivering nozzle 74.

Since, according to the first example, in bar machines for dispensing coffee 1 the filter holder 71, with which the optical sensor 100 is associated, is removable from the machine 1 itself, the optical sensor 100 comprises data communication means 16, which can comprise, as an alternative:
(i) a wireless data communication module 161, in data communication with a corresponding data communication module 162 the processing and control unit 15 is provided with, or
(ii) an electrical wiring comprising electrical connectors (not illustrated) respectively disposed on the filter holder 71 and on the delivery group 5, configured to establish an electrical contact when the filter holder 71 is fixed to the delivery group 5.

Preferably, the optical sensor 100 and the processing and control unit 15 are configured to communicate via NFC (Near Field Technology) in order to allow to send the generated signals, by the optical sensor 100, to the processing and control unit 15. In this regard, for example, the wireless data communication module 161 and the corresponding data communication module 162 of the control unit 15 comprise respective Bluetooth connection means configured to connect to each other.

Advantageously, the optical sensor 100 can be electrically supplied by means of the above-mentioned electrical connectors and/or by means of a rechargeable battery, not illustrated, eventually rechargeable still by means of the above-mentioned electrical connectors.

Advantageously, as illustrated with reference to the first embodiment, the machine 1 can comprise un grinding device 11 adapted to grind a quantity of coffee grains to obtain a coffee powder insertable into the container 7, and particularly into the filter 70. The grinding device 11 further comprises a grain size adjustment device of the coffee powder, by means of which it is possible to vary the fineness of the grinding of the coffee grains, to obtain a more or less fine coffee powder (that is, with greater or smaller grain size). The processing and control unit 15 is connected to the grinding device 11 and is configured to adjust the operation of the grinding device 11 on the basis of the signal indicative of the properties of the coffee cream and/or on the basis of the signal proportional to the extraction of coffee, such as, for example, the signal indicative of the quantity of soluble solids present in the coffee liquid part.

Advantageously, indeed, the processing and control unit 15 is configured both to control the duration of operation of the grinding device 11 so as to grind a desired dose, in grams, of ground coffee, and to adjust, by means of the grain size adjustment device, the grain size of the coffee powder being grinded.

Indeed, upon varying the quantity of coffee powder present in the filter 70, as well as upon varying the grain size of the coffee powder present in the filter 70, also the counterpressure exerted by the dose of coffee powder when flooded by the pressurized water varies.

Accordingly, also the extraction of coffee varies, and this can be found by analysing the above-mentioned signal indicative of the properties of the cream and of the quantity of soluble solids present in the liquid coffee part.

In this way, for example, when a powder with finer grain size, tending to become more compact when flooded by water, is present in the filter 70, it is possible to intervene also on the pressure the pump 3 has to exert to have an optimal infusion and percolation of the espresso coffee, for example by suitably increasing the pressure.

Advantageously, also the signal indicative of the temperature of the delivered coffee, detected by the temperature sensor 155, can be used by the processing and control unit 15, and integrated with the other information made available by the optical sensor 100, to perform the checking and adjusting described above.

The grinding device 11 can be an integral part of the machine 1 itself or consist of an external grinder usable in coupling with a coffee machine 1.

Similarly, it is possible to intervene also on the heating device 6, for example by increasing the temperature of the pressurized water striking the coffee powder.

The taste of the coffee varies as a function of the extraction of the coffee: an under-extracted coffee has insufficient organoleptic properties and taste, an over-extracted coffee can be excessively strong and full-bodied, as well as have acid notes conferring a bad taste to the drink.

By means of the optical sensor 100 it is thus possible to establish if a coffee is under-extracted, for example because the pressurized hot water passes too quickly through the dose of coffee powder, or because the dose of coffee powder is too little, or if a coffee is over-extracted, for example because the dose of coffee powder is excessive, and/or too compacted, as far as the pressurized hot water finds an excessive strength upon passing and extracts from the coffee powder, as said, even undesired substances conferring a bad taste to the coffee.

Advantageously, further, using the optical sensor 100 also allows to identify the optimal dose of coffee powder able to ensure, and maintain during various coffee deliveries, a desired level of extraction of the coffee. In this way, in addition to maintaining the coffee quality, even savings on quantity of used coffee powder, preventing overdosing and excessive pressing of the coffee powder, is obtained.

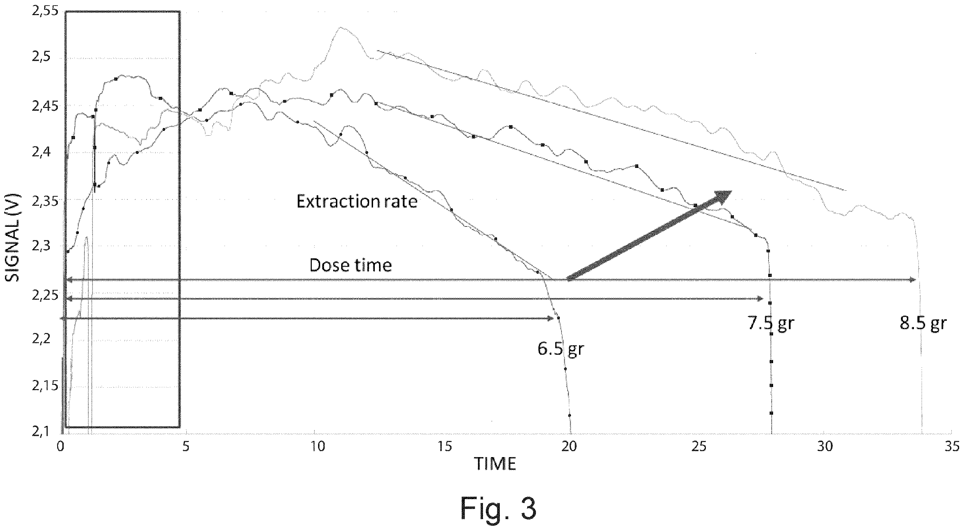

In figure 3 there is illustrated, in three different examples, the electrical voltage signal, suitably filtered, exiting the optical sensor 100, that is, the first electrical signal generated by the front photodiode 105.

In figure 3 there are particularly depicted the voltage signals (in Volt) generated by the optical sensor 100 while dispensing coffee prepared on the basis of a 6.5-gram, 7.5-gram and 8.5-gram dose of powdered coffee, respectively.

Nowadays, the known-type bar coffee machines generally have a flowmeter interrupting the delivery of pressurized hot water when a determined volume of water, needed to make a cup of coffee, has been delivered.

As can be seen from figure 3, the signal exiting the optical sensor 100 is reset after about 20 seconds in case of a 6.5-gram dose of powdered coffee, after about 27 seconds in case of a 7.5-gram dose of powdered coffee and after about 34 seconds in case of an 8.5-gram dose of coffee. Indeed, the greater the quantity of powdered coffee present in the filter 70, the greater the strength encountered by the pressurized hot water, the greater the time required to deliver the desired coffee volume.

In the first about 5-10 seconds of delivering of pressurized hot water to the dose of coffee powder there is also the infusion of the powder itself, while in the following seconds the real percolation and thus the extraction of the coffee occur.

Depending on the quantity of coffee powder present in the filter 70 the curve of the voltage signal varies. Indeed, as indicated by the three linear interpolation straight lines illustrated in figure 3, the speed of extraction of coffee varies.

Now, since the quantity of soluble solids present in the liquid coffee part, that is, the so-called IDS, is substantially proportional to the integral of the curve of extraction of the coffee, it can be seen how, because of the optical sensor 100, the delivery of pressurized hot water can be interrupted not long after a predetermined time or after delivering a predetermined coffee volume, but as a function of a data indicative of the actual extraction, that is, of a data indicative of the optimal quantity of soluble solids present in the liquid coffee part, in other words the so-called TDS.

Because of the presence of the optical sensor 100, operating online in the machine 1 and in real time, according to the specific example discussed above, it is thus possible to optimize the making of the coffee on the basis of the actual extraction of the same, for example by stopping the pump 3 and interrupting the delivery of pressurized hot water when the desired extraction of coffee is achieved.

In figure 4 there is illustrated the electrical voltage signal, suitably filtered, exiting the optical sensor 100, detected during two coffee deliveries with two different coffee powder blends, for the same other delivering parameters. The instant indicated by 0 represents the start of detecting and the pressurization of the pump 3. After about 4 secondi, in both the deliveries, the optical sensor 100 starts to detect the voltage signal indicating the passage of the coffee flow. As illustrated in such figure 4, varying the type of coffee blend, the curve of the voltage signal exiting the optical sensor 100 varies. Therefore, on the basis of such voltage signal, it is possible to also distinguish the used type of coffee blend.

In figure 5 there is illustrated the electrical voltage signal, suitably filtered, exiting the optical sensor 100, detected during two coffee deliveries with one coffee powder blend pressed in the filter holder 71 with a different force, for the same other delivering parameters. The dashed curve reports the voltage signal in case of coffee powder pressed at 20 kgf, while the continuous curve reports the voltage signal in case of coffee powder pressed at 12 kgf. The pressing degree of the coffee powder in the filter holder 71 involves indeed a different percolation of the water through the coffee powder, and thus a different extraction of coffee and also a different formation of cream.

Further, as illustrated in the chart of figure 6, because of the presence of the optical sensor 100 it is possible to form curves representative of the step of forming the cream in the coffee, so as to allow to distinguish the start and the end of the step of forming the coffee cream, as well as to distinguish if a delivery has generated a greater volume of cream, as in the case of the continuous curve, or a smaller volume of cream, as in the case of the dashed curve. The volume of cream generated while dispensing coffee is indeed substantially proportional to the integral of the curve illustrated in figure 6, which curve is obtained on the basis of the standard deviation of the voltage signal detected by the optical sensor 100. The instant indicated by 0 represents the start of detecting and the pressurization of the pump 3. After about 4 seconds, in both the deliveries, the optical sensor 100 generates a signal peak indicating the passage of the very first cream, that is, the very first emulsion containing coffee and air with carbon dioxide contained in the coffee powder. After some instants, there is the actual step of forming the cream, which depends on the features of the coffee powder (e.g., type of blend, grain size, pressing), but also on the contour conditions of filter 70 and filter holder 71, since the temperatures of filter and filter holder can also affect the step of forming the cream.

Advantageously, the machine 1 also comprises a treatment device 13 of the water sent to the delivery group 5.

Such water treatment device 13 is hydraulically connected to the water source 14, which can consist of the hydric network or of a water tank.

Such water treatment device 13 can be a filter, such as for example a reverse osmosis filter as explained below, or a water softener able to modify the pH of the water, or even a filter configured to integrate the filtering and water softening functions.

The water treatment device 13, in particular in case of internal osmosis filters is advantageously able also to "recreate" the water to be sent to the delivery group 5, for example by purifying it and enriching it with substances such as magnesium, sodium, calcium. Indeed, the water exiting a reverse osmosis filter is generally free of mineral salts and other substances required to the extraction of the coffee, and in this case a step of remineralizing the water through dedicated filters is needed.

Advantageously, the processing and control unit 15 is connected to the treatment device 13 and is configured to adjust one or more water treatment parameters on the basis of the signal indicative of the properties of the coffee cream and/or of the signal proportional to the extraction of coffee.

Since the coffee quality also depends on the quality of the water by which it is made, the information provided by the optical sensor 100 can be used, indirectly, also to establish the impact of the used water quality on the coffee quality, and thus intervene, online and in real time, on the water treatment device 13 to suitably modify a number of parameters thereof.

With reference to the second embodiment of the machine 1, illustrated in figure 2, the container 7 is a disposable capsule 72, containing a predetermined dose of ground coffee.

In this case, the machine 1 for dispensing coffee is a capsule or pod machine, for home use.

The present invention also comprises the automatic-type machines for dispensing coffee, which only substantial difference with respect to the machines for dispensing coffee as those of the first embodiment consists in that the coffee powder is conveyed to the container 7 in an automatic manner, at each coffee delivery, eventually following coffee grains grinding by means of a grinding device 11 integrated itself in the machine 1 itself. Indeed, such automatic-type machines, both professional and for offices and home environments, are also referred to as "beans to cup" machines as, in a completely automatic manner, they deliver coffee directly starting from the grains.

Advantageously, the optical sensor 100 can be integrated in a portion of the duct through which the coffee flow flows before exiting the dispensing opening 9.

Advantageously, the machine 1 can comprise displaying means 91 of the signals processed by the processing and control unit 15. Such displaying means 91 are in data communication with the processing and control unit 15 and can for example consist of a digital display, or a screen.

Advantageously, the machine 1 can comprise command input means 92 connected to the processing and control unit 15. Such command input means 92 can for example consist of knobs, digital keyboards, touch screens.

The operating parameters of the machine 1, such as for example the operating parameters of one or more of pump 3, heating device 6, grinding device 11, water treatment device 13, can be manually adjusted by the operator, intervening on the command input means 92, on the basis of the signals displayed on the displaying means 91, or, preferably, can be adjusted in an automatic manner, by the processing and control unit 15, as described above.

Advantageously, the automatic and manual operation modes can also coexist.

Advantageously, the optical sensor 100 can comprise also a preferably digital camera 170 configured to frame, in a plan view from above, the coffee delivered into the cup 60 and to generate one or more images and/or one or more videos of the coffee delivered into the cup 60. The camera 170 is advantageously connected to the processing and control unit 15, which is configured to process and store the images and/or videos detected by such camera 170. Such images and/or videos of the result of the coffee delivered into the cup 60 can be stored, digitally elaborated, and used to obtain additional process information, adapted to be integrated to the information obtained by the quality optical sensor 100. Furthermore, such images and/or videos of the result of the coffee delivered into the cup 60 can be shared with an external terminal, such as a smartphone or other mobile device, and/or in a cloud network, for example in order to allow a sharing on social media or even in order to enable gamification scenarios in the coffee world.

Such sharing can occur by means of NFC (Near Field Technology), for example by means of Bluetooth connection means.

As mentioned above, the present finding also relates to a sensorized filter holder 71, that is, a filter holder associable with a machine for dispensing coffee 1, and in particular with a delivery group 5 thereof, configured to be used as a measuring instrument. Such sensorized filter holder 71 comprises at least one dispensing opening 9 formed in the filter holder 71 itself. The filter holder 71 further comprises a coffee quality optical sensor 100 associated with the filter holder 71 in proximity of the dispensing opening 9. Such optical sensor 100 can have one or more of the same technical features already described above with reference to the machine 1, but integrates therein a processing and control unit 15 connected to the optical sensor 100 itself and configured to receive and process the electrical signal generated by the front photodiode 105 to generate a signal indicative of the properties of the coffee cream present in the coffee flow exiting the dispensing opening 9 and/or a signal proportional to the extraction of coffee in the liquid coffee part of the coffee flow exiting the dispensing opening 9.

Such a sensorized filter holder 71 can be used as a measuring instrument to measure the properties of the cream and/or of the extraction of coffee, for example in order to provide for occasional calibrations of the coffee machines.

The present finding also relates to a process for dispensing coffee comprising the steps of:
- having a machine 1 for dispensing coffee as described above;
- dispensing a coffee flow comprising coffee cream and liquid coffee;

- detecting the first electrical signal generated by the front photodiode 105 of the optical sensor 100, as described above;
- generating a signal indicative of the properties of the coffee cream and/or a signal proportional to the extraction of coffee in the liquid coffee, on the basis of such first electrical signal;
- checking the coffee quality on the basis of said signal indicative of the properties of the coffee cream and/or of said signal proportional to the extraction of coffee.

Advantageously, the process also comprises the step of generating, on the basis of said first electrical signal, a signal indicative of the presence of polluting substances in the coffee flow.

Advantageously, the process for dispensing coffee comprises a step of cleaning the machine 1 for dispensing coffee, comprising in turn the steps of:
- circulating in the machine 1 a liquid for cleaning the machine 1 itself;
- interrupting or continuing said step of circulating said cleaning liquid on the basis of said signal indicative of the presence of polluting substances.

Advantageously, the process for dispensing coffee can comprise the step of adjusting the operation of the pump 3 and/or of the heating device 6 on the basis of the signal indicative of the properties of the coffee cream and/or on the basis of the signal proportional to the extraction of coffee.

In particular, the processing and control unit 15, once processed the signal indicative of the properties of the coffee cream and/or the signal proportional to the extraction of coffee, such as for example the signal indicative of the quantity of soluble solids present in the liquid coffee part, establishes if and how the operation of the pump 3 can be varied, in order to vary the pressure of the water sent to the delivery group 5. The same applies to the heating device 6 and to the variation of temperature of the water sent to the delivery group 5.

Such adjusting occurs online and in real time. In particular, such adjusting can occur between the delivery of a coffee and the subsequent, but also when delivering a single coffee.

Advantageously, the process for dispensing coffee can further comprise the step of adjusting the operation of the grinding device 11 on the basis of the signal indicative of the properties of the coffee cream and/or on the basis of the signal proportional to the extraction of coffee, such as for example the signal indicative of the quantity of soluble solids present in the liquid coffee part.

In particular, the processing and control unit 15, once processed the signal indicative of the properties of the coffee cream and/or the signal proportional to the extraction of coffee establishes if and how the operation of the grinding device 11 can be varied, in order to vary the quantity of grinded coffee powder and/or in order to vary the grain size of the grinded coffee powder, so as to optimize the extraction of coffee.

Even in this case, the adjusting occurs online and almost in real time, between the delivery of a coffee and the subsequent.

Advantageously, the process for dispensing coffee comprises the step of selecting, on the basis of the signal indicative of the properties of the coffee cream and/or on the basis of the signal proportional to the extraction of coffee, such as for example the signal indicative of the quantity of soluble solids present in the liquid coffee part, the optimal parameters for coffee profiling, such optimal parameters comprising the pressure and the flow rate of the water and preferably also the temperature of the water.

Advantageously, in the case where the machine 1 also comprises a grinding device 11, the process for dispensing coffee comprises the step of selecting, on the basis of the signal indicative of the properties of the coffee cream and/or the signal proportional to the extraction of coffee, such as for example the signal indicative of the quantity of soluble solids present in the liquid coffee part, the optimal parameters for coffee powder grinding, such optimal parameters comprising the quantity and preferably the grain size of the coffee powder.

In other words, the optical sensor 100 allows to obtain a sort of fingerprint for the coffee dispensed by the machine 1 with which the optimal values of the parameters for dispensing coffee (e.g., pressure of the water, flow rate of the water, temperature of the water, typology and quantity of coffee powder, grain size of the coffee powder, pressing of the coffee powder) can be associated.

Advantageously, the processing and control unit 15 can comprise a data communication module 162 configured to allow the wireless connection of the processing and control unit 15 to an external terminal, such as a smartphone or other mobile device, and/or to a cloud network. Even in this case, the wireless connection with the external terminal can occur by means of NFC technology, for example via Bluetooth, if the data communication module 162 of the processing and control unit 15 comprises the above-cited Bluetooth connection means.

Advantageously, the machine 1, or the sensorized-type filter holder 71, can comprise also a data storage module 17, which can be included in the processing and control unit 15, or can be present in a cloud network and be connected to the processing and control unit 15 by means of the wireless communication means 162.

The data storage module 17 is advantageously configured to store and file both the above-mentioned signals indicative of the properties of the coffee cream part and/or of the properties of extraction of the coffee in the liquid coffee part (e.g., quantity of soluble solids), and the optimal parameters for coffee profiling (relative to temperature, pressure and/or flow) and/or coffee powder grinding, as well as the images and videos detected by the camera 170, so that these optimal parameters can be recalled and used if necessary to control the operation of the machine 1 based on the coffee being delivered.

Furthermore, it is also possible to interface an external terminal to the processing and control unit 15 in order to operate the machine 1 by means of such external terminal.

Advantageously, the machine 1 can comprise an optical reader connected to the processing and control unit 15 configured to read a code associated with the powder and/or with the coffee grains, wherein the optimal parameters for coffee profiling and/or for coffee powder grinding are pre-set on the basis of said code.

Advantageously, such code can be a two-dimensional barcode or a QR code associated with a batch of coffee grains, or with a package of coffee grains, or with a package of ground coffee, or even with a coffee capsule or pod.

Anyway, the presence of the optical sensor 100 allows to adjust, online and in real time, the parameters for coffee profiling and/or for coffee powder grinding on the basis of the parameters pre-set on the basis of the above-mentioned code.

The operation of the machine for dispensing coffee 1 is clear and apparent from what has been described.

It has been actually found that the machine for dispensing coffee, according to the present invention, performs the task, as well as the prefixed objects, as it allows to check the dispensed coffee quality.

Another advantage of the machine for dispensing coffee, according to the invention, consists in adjusting online and in real time, the operating parameters of the machine itself, based on the quality of the coffee being delivered.

A further advantage of the machine, according to the invention, consists in the possibility to adjust in a continuative and repeatable manner, almost in real time, the dispensed coffee quality.

Another advantage of the machine, according to the invention, consists in that the adjusting of the operating parameters of the same can be optimized, in a precise and repeatable manner, for any typology of coffee grains, regardless of their roasting degree, and their humidity, as well as upon varying the quality of the water used for dispensing coffee.

The machine for dispensing coffee, according to the invention, is able indeed to adapt the operating parameters to obtain optimal, constant, and repeatable values for coffee extraction, even upon varying the above-mentioned conditions.

Still another advantage of the invention consists in that it is possible to vary the operating parameters also considering the quality of the delivery water. Indeed, water with low lime content, or generally with low electrical conductivity, has a higher extractive capacity, and thus it is possible to act on the grain size of the powder in order to compensate the capacity of the water to extract aromas from the coffee. Indeed, the machine also allows to vary the grain size of the coffee powder on the basis of the hardness of the water.

Still another advantage of the invention consists in allowing the machine for dispensing coffee to open up to the world of social media and to introduce also in the gamification field.

The machine for dispensing coffee thus designed can be subjected to several modifications and variations as long as they fall under the scope of the appended claims.

Furthermore, all the details can be replaced by other elements technically equivalent.

Actually, the employed materials, as long as compatible with the specific use, as well as the contingent sizes and shapes, will be any as required.

## Claims

1. Machine (1) for dispensing coffee comprising:
- at least one pump (3);
- at least one heating device (6);
- at least one delivery group (5), wherein said at least one pump (3) is adapted to send pressurized water to said at least one delivery group (5), and said heating device (6) is adapted to heat said water sent to said at least one delivery group (5);
- at least one container (7) of coffee powder which can be associated with said at least one delivery group (5);
- a dispensing opening (9) adapted to deliver, into a cup (60), coffee obtained by percolating said pressurized heated water through a dose of coffee powder contained in said container (7), wherein said coffee comprises liquid coffee and coffee cream;
**characterized in that** it comprises, in proximity to said dispensing opening (9), a coffee quality optical sensor (100) adapted to intercept a coffee flow exiting said dispensing opening (9), said optical sensor (100) comprising a radiation source (101) adapted to generate a radiation (103) which strikes said coffee flow exiting said dispensing opening (9) along an irradiation direction (R) incident to the exit direction of said coffee flow, said optical sensor (100) further comprising at least one front photodiode (105) placed substantially along said irradiation direction (R) on a side opposite to said radiation source (101) with respect to said coffee flow exiting said dispensing opening (9), said at least one front photodiode (105) generating a first electrical signal depending on the part of the radiation that crosses said coffee flow exiting said dispensing opening (9),
said machine (1) for dispensing coffee further comprising a processing and control unit (15) connected to said optical sensor (100) configured to receive said first electrical signal, said processing and control unit (15) being adapted to process said first electrical signal and to generate a signal indicative of the properties of said coffee cream present in said coffee flow exiting said dispensing opening (9) and/or a signal proportional to the extraction of coffee in said liquid coffee present in said coffee flow exiting said dispensing opening (9).

2. Machine (1) according to claim 1, wherein said signal proportional to the extraction of coffee is a signal indicative of the quantity of soluble solids present in said liquid coffee of said coffee flow exiting said dispensing opening (9).

3. Machine (1) according to claim 1 or 2, wherein said radiation source (101) comprises a laser source (22), said radiation (103) comprising a laser light beam, said front photodiode (105) generating said first electrical signal, wherein said first electrical signal depends on the modulation of the power of said laser light beam operated, according to a retro-injection interferometry effect, by the particles present in said coffee flow exiting said dispensing opening (9).

4. Machine (1) according to one or more of the preceding claims, wherein said optical sensor (100) comprises a lateral photodiode (109) placed along a diffusion direction (D) incident to, and preferably substantially orthogonal to, said irradiation direction (R), said lateral photodiode (109) generating a second electrical signal depending on the part of radiation that is diffused by said coffee flow exiting said dispensing opening (9) along substantially said diffusion direction (D).

5. Machine (1), according to claim 4 when dependent on claim 3, comprising both said front photodiode (105) and said lateral photodiode (109), said processing and control unit (15) connected to said optical sensor (100) being configured to receive said first electrical signal of said front photodiode (105) and said second electrical signal of said lateral photodiode (109) and to process said signal indicative of the properties of said coffee cream and/or said signal proportional to the extraction of coffee on the basis of said first electrical signal and said second electrical signal.

6. Machine (1) according to one or more of the preceding claims, wherein said processing and control unit (15) is configured to adjust the operation of said at least one pump (3) and/or of said at least one heating device (6) on the basis of said signal indicative of the properties of said coffee cream and/or of said signal proportional to the extraction of coffee.

7. Machine (1) according to one or more of the preceding claims, wherein said container (7) comprises a filter (70) adapted to receive said coffee powder, said filter (70) being adapted to be housed in a filter holder (71), said filter holder (71) being associable with said at least one delivery group (5) to deliver said dose of espresso coffee into said cup (60), said dispensing opening (9) being formed in said filter holder (71), said optical sensor (100) being associated with said filter holder (71) in proximity of said dispensing opening (9).

8. Machine (1), according to one or more of the preceding claims, comprising a grinding device (11) adapted to grind a quantity of coffee grains to obtain a coffee powder insertable into said container (7), said grinding device (11) comprising a grain size adjustment device of said coffee powder, said processing and control unit (15) being connected to said grinding device (11) and being configured to adjust the operation of said grinding device (11) on the basis of said signal indicative of the properties of said coffee cream and/or of said signal proportional to the extraction of coffee.

9. Machine (1) according to one or more of the preceding claims, comprising a treatment device (13) for the water sent to said at least one delivery group (5), said processing and control unit (15) being connected to said treatment device (13) and being configured to adjust one or more water treatment parameters on the basis of said signal indicative of the properties of said coffee cream and/or of said signal proportional to the extraction of coffee.

10. Machine (1), according to one or more of claims 1 to 6, wherein said container (7) is a disposable capsule (72) containing a dose of ground coffee.

11. Machine (1), according to one or more of the preceding claims, wherein said optical sensor (100) comprises a camera (170) configured to frame, in a substantially plan view from above, the coffee dispensed in said cup (60) and to generate one or more images and/or one or more videos of said coffee delivered into said cup (60), said camera (170) being connected to said processing and control unit (15).

12. Sensorized filter holder (71), associable with a machine (1) for dispensing coffee, comprising at least one delivery opening (9) made in said filter holder (71), **characterized by** the fact that it comprises a coffee quality optical sensor (100) associated with said filter holder (71) in proximity of said dispensing opening (9), said optical sensor (100) being adapted to intercept the coffee flow exiting said dispensing opening (9), said optical sensor (100) comprising a radiation source (101) adapted to generate a radiation (103) which strikes said coffee flow exiting said dispensing opening (9) along an irradiation direction (R) incident to the exit direction of said coffee flow, said optical sensor (100) further comprising at least one front photodiode (105) placed substantially along said irradiation direction (R) on a side opposite to said radiation source (101) with respect to said coffee flow exiting said dispensing opening (9), said at least one front photodiode (105) generating a first electrical signal depending on the part of radiation that crosses said coffee flow exiting said dispensing opening (9), said sensorized filter holder (71) further comprising a processing and control unit (15) connected to said optical sensor (100) configured to receive said first electrical signal, said processing and control unit (15) being adapted to process said first electrical signal and to generate a signal indicative of the properties of the coffee cream present in said coffee flow exiting said dispensing opening (9) and/or a signal proportional to the extraction of coffee in the liquid coffee present in said coffee flow exiting said dispensing opening (9).

13. Process for dispensing coffee **characterized by** the fact of comprising the steps of:
- having a machine (1) for dispensing coffee according to one or more of claims 1 to 11;
- dispensing a coffee flow comprising coffee cream and liquid coffee;
- detecting said first electrical signal generated by said at least one front photodiode (105) of said optical sensor (100);
- generating a signal indicative of the properties of said coffee cream and/or a signal proportional to the extraction of coffee in said liquid coffee, on the basis of said first electrical signal;
- checking the quality of said coffee on the basis of said signal indicative of the properties of said coffee cream and/or of said signal proportional to the extraction of coffee.

14. Process according to claim 13, comprising the step of generating, on the basis of said first electrical signal, a signal indicative of the presence of polluting substances in said coffee flow.

15. Process according to claim 14, comprising a cleaning step of said machine (1), comprising the steps of:
- circulating in said machine (1) a liquid for cleaning the machine (1) itself;
- interrupting or continuing said step of circulating said cleaning liquid on the basis of said signal indicative of the presence of polluting substances.

16. Process according to claim 13, comprising the steps of:
- having a machine (1) for dispensing coffee according to one or more of claims 5 to 9;
- adjusting the operation of said at least one pump (3) and/or of said at least one heating device (6) on the basis of said signal indicative of the properties of said coffee cream and/or of said signal proportional to the extraction of coffee.

17. Process according to claim 13, comprising the steps of:
- having a machine (1) for dispensing coffee according to claim 7;
- adjusting the operation of the grinding device (11) on the basis of said signal indicative of the properties of said coffee cream and/or of said signal proportional to the extraction of coffee.

18. Process according to one or more of claims 13 to 17, comprising the step of selecting, on the basis of said signal indicative of the properties of said coffee cream and/or on the basis of said signal proportional to the extraction of coffee, the optimal parameters for coffee profiling and/or for coffee powder grinding.

## Patentansprüche

1. Maschine (1) zur Ausgabe von Kaffee, umfassend:
- mindestens eine Pumpe (3);
- mindestens eine Heizvorrichtung (6);
- mindestens eine Abgabegruppe (5), wobei die mindestens eine Pumpe (3) dazu ausgelegt ist, unter Druck stehendes Wasser an die mindestens eine Abgabegruppe (5) zu senden, und die Heizvorrichtung (6) dazu ausgelegt ist, das an die mindestens eine Abgabegruppe (5) gesendete Wasser zu erwärmen;
- mindestens einen Behälter (7) für Kaffeepulver, der mit der mindestens einen Abgabegruppe (5) assoziiert werden kann;
- eine Ausgabeöffnung (9), die ausgelegt ist, um in eine Tasse (60) Kaffee abzugeben, der durch Perkolieren des unter Druck stehenden erwärmten Wassers durch eine Dosis von Kaffeepulver, die in dem Behälter (7) enthalten ist, erhalten wird, wobei der Kaffee flüssigen Kaffee und Kaffeecreme umfasst;
**dadurch gekennzeichnet, dass** sie in der Nähe der Ausgabeöffnung (9) einen optischen Kaffeequalitätssensor (100) umfasst, der dazu ausgelegt ist, einen aus der Ausgabeöffnung (9) austretenden Kaffeestrom abzufangen, wobei der optische Sensor (100) eine Strahlungsquelle (101) umfasst, die dazu ausgelegt ist, eine Strahlung (103) zu erzeugen, die auf den aus der Ausgabeöffnung (9) austretenden Kaffeestrom entlang einer Bestrahlungsrichtung (R) trifft, die auf die Austrittsrichtung des Kaffeestroms auftrifft, wobei der optische Sensor (100) ferner mindestens eine vordere Photodiode (105) umfasst, die im Wesentlichen entlang der Bestrahlungsrichtung (R) auf einer Seite platziert ist, die der Strahlungsquelle (101) in Bezug auf den aus der Ausgabeöffnung (9) austretenden Kaffeestrom gegenüberliegt, wobei die mindestens eine vordere Photodiode (105) ein erstes elektrisches Signal in Abhängigkeit von dem Teil der Strahlung erzeugt, der den aus der Ausgabeöffnung (9) austretenden Kaffeestrom kreuzt,
wobei die Maschine (1) zur Ausgabe von Kaffee ferner eine Verarbeitungs- und Steuereinheit (15) umfasst, die mit dem optischen Sensor (100) verbunden ist, der konfiguriert ist, um das erste elektrische Signal zu empfangen, wobei die Verarbeitungs- und Steuereinheit (15) ausgelegt ist, um das erste elektrische Signal zu verarbeiten und ein Signal, das die Eigenschaften der Kaffeecreme anzeigt, die in dem aus der Ausgabeöffnung (9) austretenden Kaffeestrom vorhanden ist, und/oder ein Signal proportional zu der Extraktion von Kaffee in dem flüssigen Kaffee, der in dem aus der Ausgabeöffnung (9) austretenden Kaffeestrom vorhanden ist, zu erzeugen.

2. Maschine (1) nach Anspruch 1, wobei das Signal proportional zur Extraktion von Kaffee ein Signal ist, das die Menge an löslichen Feststoffen anzeigt, die in dem flüssigen Kaffee des aus der Ausgabeöffnung (9) austretenden Kaffeestroms vorhanden sind.

3. Maschine (1) nach Anspruch 1 oder 2, wobei die Strahlungsquelle (101) eine Laserquelle (22) umfasst, wobei die Strahlung (103) einen Laserlichtstrahl umfasst, wobei die vordere Photodiode (105) das erste elektrische Signal erzeugt, wobei das erste elektrische Signal von der Modulation der Leistung des Laserlichtstrahls abhängt, der gemäß einem Retroinjektionsinterferometrieeffekt durch die Partikel betrieben wird, die in dem aus der Ausgabeöffnung (9) austretenden Kaffeestrom vorhanden sind.

4. Maschine (1) nach einem oder mehreren der vorhergehenden Ansprüche, wobei der optische Sensor (100) eine laterale Photodiode (109) umfasst, die entlang einer Diffusionsrichtung (D) platziert ist, die auf die Bestrahlungsrichtung (R) auftrifft und vorzugsweise im Wesentlichen orthogonal zu dieser ist, wobei die laterale Photodiode (109) ein zweites elektrisches Signal in Abhängigkeit von dem Teil der Strahlung erzeugt, der durch den aus der Ausgabeöffnung (9) austretenden Kaffeestrom entlang im Wesentlichen der Diffusionsrichtung (D) diffundiert wird.

5. Maschine (1) nach Anspruch 4, wenn abhängig von Anspruch 3, umfassend sowohl die vordere Photodiode (105) als auch die seitliche Photodiode (109), wobei die Verarbeitungs- und Steuereinheit (15), die mit dem optischen Sensor (100) verbunden ist, konfiguriert ist, um das erste elektrische Signal der vorderen Photodiode (105) und das zweite elektrische Signal der seitlichen Photodiode (109) zu empfangen und das Signal, das die Eigenschaften der Kaffeecreme anzeigt, und/oder das Signal proportional zur Extraktion von Kaffee auf der Grundlage des ersten elektrischen Signals und des zweiten elektrischen Signals zu verarbeiten.

6. Maschine (1) nach einem oder mehreren der vorhergehenden Ansprüche, wobei die Verarbeitungs- und Steuereinheit (15) konfiguriert ist, um den Betrieb der mindestens einen Pumpe (3) und/oder der mindestens einen Heizvorrichtung (6) auf der Grundlage des Signals, das die Eigenschaften der Kaffeecreme anzeigt, und/oder des Signals proportional zur Kaffeeextraktion einzustellen.

7. Maschine (1) nach einem oder mehreren der vorhergehenden Ansprüche, wobei der Behälter (7) einen Filter (70) umfasst, der ausgelegt ist, um das Kaffeepulver zu empfangen, wobei der Filter (70) ausgelegt ist, um in einem Filterhalter (71) untergebracht zu werden, wobei der Filterhalter (71) mit der mindestens einen Abgabegruppe (5) assoziierbar ist, um die Dosis von Espresso-Kaffee in die Tasse (60) abzugeben, wobei die Ausgabeöffnung (9) in dem Filterhalter (71) ausgebildet ist, wobei der optische Sensor (100) mit dem Filterhalter (71) in der Nähe der Ausgabeöffnung (9) assoziiert ist.

8. Maschine (1) nach einem oder mehreren der vorhergehenden Ansprüche, umfassend eine Mahlvorrichtung (11), die ausgelegt ist, um eine Menge an Kaffeekörnern zu mahlen, um ein in den Behälter (7) einsetzbares Kaffeepulver zu erhalten, wobei die Mahlvorrichtung (11) eine Korngrößeneinstellvorrichtung des Kaffeepulvers umfasst, wobei die Verarbeitungs- und Steuereinheit (15) mit der Mahlvorrichtung (11) verbunden ist und konfiguriert ist, um den Betrieb der Mahlvorrichtung (11) auf der Grundlage des Signals, das die Eigenschaften der Kaffeecreme anzeigt, und/oder des Signals proportional zur Kaffeeextraktion einzustellen.

9. Maschine (1) nach einem oder mehreren der vorhergehenden Ansprüche, umfassend eine Behandlungsvorrichtung (13) für das an die mindestens eine Abgabegruppe (5) gesendete Wasser, wobei die Verarbeitungs- und Steuereinheit (15) mit der Behandlungsvorrichtung (13) verbunden ist und konfiguriert ist, um einen oder mehrere Wasserbehandlungsparameter auf der Grundlage des Signals, das die Eigenschaften der Kaffeecreme anzeigt, und/oder des Signals proportional zur Kaffeeextraktion einzustellen.

10. Maschine (1) nach einem oder mehreren der Ansprüche 1 bis 6, wobei der Behälter (7) eine Einwegkapsel (72) ist, die eine Dosis gemahlenen Kaffees enthält.

11. Maschine (1) nach einem oder mehreren der vorhergehenden Ansprüche, wobei der optische Sensor (100) eine Kamera (170) umfasst, die dazu konfiguriert ist, den in der Tasse (60) ausgegebenen Kaffee in einer im Wesentlichen Draufsicht von oben zu umrahmen und ein oder mehrere Bilder und/oder ein oder mehrere Videos des in die Tasse (60) abgegebenen Kaffees zu erzeugen, wobei die Kamera (170) mit der Verarbeitungs- und Steuereinheit (15) verbunden ist.

12. Sensorisierter Filterhalter (71), der mit einer Maschine (1) zur Ausgabe von Kaffee assoziierbar ist und mindestens eine in dem Filterhalter (71) ausgebildete Abgabeöffnung (9) umfasst, **dadurch gekennzeichnet, dass** er einen optischen Kaffeequalitätssensor (100) umfasst, der mit dem Filterhalter (71) in der Nähe der Ausgabeöffnung (9) assoziiert ist, wobei der optische Sensor (100) ausgelegt ist, um den aus der Ausgabeöffnung (9) austretenden Kaffeestrom abzufangen, wobei der optische Sensor (100) eine Strahlungsquelle (101) umfasst, die dazu ausgelegt ist, eine Strahlung (103) zu erzeugen, die auf den aus der Ausgabeöffnung (9) austretenden Kaffeestrom entlang einer Bestrahlungsrichtung (R) trifft, die auf die Austrittsrichtung des Kaffeestroms auftrifft, wobei der optische Sensor (100) ferner mindestens eine vordere Photodiode (105) umfasst, die im Wesentlichen entlang der Bestrahlungsrichtung (R) auf einer Seite platziert ist, die der Strahlungsquelle (101) in Bezug auf den aus der Ausgabeöffnung (9) austretenden Kaffeestrom gegenüberliegt, wobei die mindestens eine vordere Photodiode (105) ein erstes elektrisches Signal in Abhängigkeit von dem Teil der Strahlung erzeugt, der den aus der Ausgabeöffnung (9) austretenden Kaffeestrom kreuzt, wobei der sensorisierte Filterhalter (71) ferner eine Verarbeitungs- und Steuereinheit (15) umfasst, die mit dem optischen Sensor (100) verbunden ist, der konfiguriert ist, um das erste elektrische Signal zu empfangen, wobei die Verarbeitungs- und Steuereinheit (15) ausgelegt ist, um das erste elektrische Signal zu verarbeiten und ein Signal, das die Eigenschaften der Kaffeecreme anzeigt, die in dem aus der Ausgabeöffnung (9) austretenden Kaffeestrom vorhanden ist, und/oder ein Signal proportional zur Extraktion von Kaffee in dem flüssigen Kaffee, der in dem aus der Ausgabeöffnung (9) austretenden Kaffeestrom vorhanden ist, zu erzeugen.

13. Verfahren zur Ausgabe von Kaffee, **dadurch gekennzeichnet, dass** es die folgenden Schritte umfasst:
- Verfügen über eine Maschine (1) zur Ausgabe von Kaffee nach einem oder mehreren der Ansprüche 1 bis 11;
- Ausgeben eines Kaffeestroms, der Kaffeecreme und flüssigen Kaffee umfasst;
- Erfassen des ersten elektrischen Signals, das von der mindestens einen vorderen Photodiode (105) des optischen Sensors (100) erzeugt wird;
- Erzeugen eines Signals, das die Eigenschaften der Kaffeecreme anzeigt, und/oder eines Signals proportional zur Extraktion von Kaffee in dem flüssigen Kaffee, auf der Grundlage des ersten elektrischen Signals;
- Überprüfen der Qualität des Kaffees auf der Grundlage des Signals, das die Eigenschaften der Kaffeecreme anzeigt, und/oder des Signals proportional zur Kaffeeextraktion.

14. Verfahren nach Anspruch 13, umfassend den Schritt zum Erzeugen eines Signals auf der Grundlage des ersten elektrischen Signals, das das Vorhandensein von Schadstoffen in dem Kaffeestrom anzeigt.

15. Verfahren nach Anspruch 14, umfassend einen Reinigungsschritt der Maschine (1), umfassend die Schritte von:
- Zirkulieren einer Flüssigkeit in der Maschine (1) zum Reinigen der Maschine (1) selbst;
- Unterbrechen oder Fortsetzen des Schrittes des Zirkulierens der Reinigungsflüssigkeit auf der Grundlage des Signals, das das Vorhandensein von Schadstoffen anzeigt.

16. Verfahren nach Anspruch 13, umfassend die Schritte von:
- Verfügen über eine Maschine (1) zur Ausgabe von Kaffee nach einem oder mehreren der Ansprüche 5 bis 9;
- Einstellen des Betriebs der mindestens einen Pumpe (3) und/oder der mindestens einen Heizvorrichtung (6) auf der Grundlage des Signals, das die Eigenschaften der Kaffeecreme anzeigt, und/oder des Signals proportional zur Kaffeeextraktion.

17. Verfahren nach Anspruch 13, umfassend die Schritte von:
- Verfügen über eine Maschine (1) zur Ausgabe von Kaffee nach Anspruch 7;
- Einstellen des Betriebs der Mahlvorrichtung (11) auf der Grundlage des Signals, das die Eigenschaften der Kaffeecreme anzeigt, und/oder des Signals proportional zur Kaffeeextraktion.

18. Verfahren nach einem oder mehreren der Ansprüche 13 bis 17, umfassend den Schritt des Auswählens der optimalen Parameter für die Kaffeeprofilierung und/oder für die Kaffeepulvermahlung auf der Grundlage des Signals, das die Eigenschaften der Kaffeecreme anzeigt, und/oder auf der Grundlage des Signals proportional zur Kaffeeextraktion.

## Revendications

1. Machine (1) de distribution de café comprenant:
- au moins une pompe (3);
- au moins un dispositif de chauffage (6);
- au moins un groupe de distribution (5), dans lequel ladite au moins une pompe (3) est adaptée pour envoyer de l'eau sous pression vers ledit au moins un groupe de distribution (5), et ledit dispositif de chauffage (6) est adapté pour chauffer ladite eau envoyée vers ledit au moins un groupe de distribution (5);
- au moins un récipient (7) de café en poudre qui peut être associé audit au moins un groupe de distribution (5);
- une ouverture de distribution (9) adaptée pour délivrer, dans une tasse (60), du café obtenu par percolation de ladite eau chauffée sous pression à travers une dose de poudre de café contenue dans ledit récipient (7), dans lequel ledit café comprend du café liquide et de la crème de café;
**caractérisé en ce qu'**elle comprend, à proximité de ladite ouverture de distribution (9), un capteur optique de qualité de café (100) adapté pour intercepter un flux de café sortant de ladite ouverture de distribution (9), ledit capteur optique (100) comprenant une source de rayonnement (101) adaptée pour générer un rayonnement (103) qui frappe ledit flux de café sortant de ladite ouverture de distribution (9) le long d'une direction d'irradiation (R) incidente par rapport à la direction de sortie dudit flux de café, ledit capteur optique (100) comprenant en outre au moins une photodiode frontale (105) placée sensiblement le long de ladite direction d'irradiation (R) sur un côté opposé à ladite source de rayonnement (101) par rapport audit flux de café sortant de ladite ouverture de distribution (9), ladite au moins une photodiode frontale (105) générant un premier signal électrique en fonction de la partie du rayonnement qui traverse ledit flux de café sortant de ladite ouverture de distribution (9),
ladite machine (1) de distribution de café comprenant en outre une unité de traitement et de commande (15) reliée audit capteur optique (100) configuré pour recevoir ledit premier signal électrique, ladite unité de traitement et de commande (15) étant adaptée pour traiter ledit premier signal électrique et pour générer un signal indiquant des propriétés de ladite crème de café présente dans ledit flux de café sortant de ladite ouverture de distribution (9) et/ou un signal proportionnel à l'extraction de café dans ledit café liquide présent dans ledit flux de café sortant de ladite ouverture de distribution (9).

2. Machine (1) selon la revendication 1, dans laquelle ledit signal proportionnel à l'extraction du café est un signal indiquant la quantité de solides solubles présents dans ledit café liquide dudit flux de café sortant de ladite ouverture de distribution (9).

3. Machine (1) selon la revendication 1 ou 2, dans laquelle ladite source de rayonnement (101) comprend une source laser (22), ledit rayonnement (103) comprenant un faisceau lumineux laser, ladite photodiode frontale (105) générant ledit premier signal électrique, ledit premier signal électrique dépendant de la modulation de la puissance dudit faisceau lumineux laser opérée, selon un effet d'interférométrie à rétro-injection, par les particules présentes dans ledit flux de café sortant de ladite ouverture de distribution (9).

4. Machine (1) selon une ou plusieurs des revendications précédentes, dans laquelle ledit capteur optique (100) comprend une photodiode latérale (109) placée le long d'une direction de diffusion (D) incidente par rapport à, et de préférence sensiblement orthogonale à, ladite direction d'irradiation (R), ladite photodiode latérale (109) générant un second signal électrique en fonction de la partie du rayonnement qui est diffusée par ledit flux de café sortant de ladite ouverture de distribution (9) sensiblement le long de ladite direction de diffusion (D).

5. Machine (1), selon la revendication 4 lorsqu'elle dépend de la revendication 3, comprenant à la fois ladite photodiode frontale (105) et ladite photodiode latérale (109), ladite unité de traitement et de commande (15) reliée audit capteur optique (100) étant configurée pour recevoir ledit premier signal électrique de ladite photodiode frontale (105) et ledit second signal électrique de ladite photodiode latérale (109) et pour traiter ledit signal indiquant des propriétés de ladite crème de café et/ou ledit signal proportionnel à l'extraction du café sur la base dudit premier signal électrique et dudit second signal électrique.

6. Machine (1) selon une ou plusieurs des revendications précédentes, dans laquelle ladite unité de traitement et de commande (15) est configurée pour régler le fonctionnement de ladite au moins une pompe (3) et/ou dudit au moins un dispositif de chauffage (6) sur la base dudit signal indiquant des propriétés de ladite crème de café et/ou dudit signal proportionnel à l'extraction du café.

7. Machine (1) selon une ou plusieurs des revendications précédentes, dans laquelle ledit récipient (7) comprend un filtre (70) adapté pour recevoir ledit café en poudre, ledit filtre (70) étant adapté pour être logé dans un porte-filtre (71), ledit porte-filtre (71) étant associable audit au moins un groupe de distribution (5) pour délivrer ladite dose de café expresso dans ladite tasse (60), ladite ouverture de distribution (9) étant formée dans ledit porte-filtre (71), ledit capteur optique (100) étant associé audit porte-filtre (71) à proximité de ladite ouverture de distribution (9).

8. Machine (1), selon une ou plusieurs des revendications précédentes, comprenant un dispositif de broyage (11) adapté pour broyer une quantité de grains de café pour obtenir une poudre de café insérable dans ledit récipient (7), ledit dispositif de broyage (11) comprenant un dispositif de réglage de la granulométrie de ladite poudre de café, ladite unité de traitement et de commande (15) étant reliée audit dispositif de broyage (11) et étant configurée pour régler le fonctionnement dudit dispositif de broyage (11) sur la base dudit signal indiquant des propriétés de ladite crème de café et/ou dudit signal proportionnel à l'extraction du café.

9. Machine (1) selon une ou plusieurs des revendications précédentes, comprenant un dispositif de traitement (13) de l'eau envoyée vers ledit au moins un groupe de distribution (5), ladite unité de traitement et de commande (15) étant reliée audit dispositif de traitement (13) et étant configurée pour régler un ou plusieurs paramètres de traitement de l'eau sur la base dudit signal indiquant des propriétés de ladite crème de café et/ou dudit signal proportionnel à l'extraction du café.

10. Machine (1), selon une ou plusieurs des revendications 1 à 6, dans laquelle ledit récipient (7) est une capsule jetable (72) contenant une dose de café moulu.

11. Machine (1), selon une ou plusieurs des revendications précédentes, dans laquelle ledit capteur optique (100) comprend une caméra (170) configurée pour cadrer, dans une vue sensiblement en plan depuis le haut, le café distribué dans ladite tasse (60) et pour générer une ou plusieurs images et/ou une ou plusieurs vidéos dudit café délivré dans ladite tasse (60), ladite caméra (170) étant reliée à ladite unité de traitement et de commande (15).

12. Porte-filtre muni de capteurs (71), associable à une machine (1) de distribution de café, comprenant au moins une ouverture de distribution (9) pratiquée dans ledit porte-filtre (71), **caractérisé en ce qu'**il comprend un capteur optique de qualité de café (100) associé audit porte-filtre (71) à proximité de ladite ouverture de distribution (9), ledit capteur optique (100) étant adapté pour intercepter le flux de café sortant de ladite ouverture de distribution (9), ledit capteur optique (100) comprenant une source de rayonnement (101) adaptée pour générer un rayonnement (103) qui frappe ledit flux de café sortant de ladite ouverture de distribution (9) le long d'une direction d'irradiation (R) incidente par rapport à la direction de sortie dudit flux de café, ledit capteur optique (100) comprenant en outre au moins une photodiode frontale (105) placée sensiblement le long de ladite direction d'irradiation (R) sur un côté opposé à ladite source de rayonnement (101) par rapport audit flux de café sortant de ladite ouverture de distribution (9), ladite au moins une photodiode frontale (105) générant un premier signal électrique en fonction de la partie du rayonnement qui traverse ledit flux de café sortant de ladite ouverture de distribution (9), ledit porte-filtre sensoriel (71) comprenant en outre une unité de traitement et de commande (15) reliée audit capteur optique (100) configurée pour recevoir ledit premier signal électrique, ladite unité de traitement et de commande (15) étant adaptée pour traiter ledit premier signal électrique et pour générer un signal indiquant des propriétés de la crème de café présente dans ledit flux de café sortant de ladite ouverture de distribution (9) et/ou un signal proportionnel à l'extraction de café dans le café liquide présent dans ledit flux de café sortant de ladite ouverture de distribution (9).

13. Procédé de distribution de café **caractérisé en ce qu'**il comprend les étapes suivantes:
- avoir une machine (1) pour distribuer du café selon une ou plusieurs des revendications 1 à 11;
- distribuer un flux de café comprenant de la crème de café et du café liquide;
- détecter ledit premier signal électrique généré par ladite au moins une photodiode frontale (105) dudit capteur optique (100);
- générer un signal indiquant des propriétés de ladite crème de café et/ou un signal proportionnel à l'extraction du café dans ledit café liquide, sur la base dudit premier signal électrique;
- contrôler la qualité dudit café sur la base dudit signal indiquant des propriétés de ladite crème de café et/ou dudit signal proportionnel à l'extraction du café.

14. Procédé selon la revendication 13, comprenant l'étape consistant à générer, sur la base dudit premier signal électrique, un signal indiquant la présence de substances polluantes dans ledit flux de café.

15. Procédé selon la revendication 14, comprenant une étape de nettoyage de ladite machine (1), comprenant les étapes suivantes:
- faire circuler dans ladite machine (1) un liquide pour le nettoyage de la machine (1) elle-même;
- interrompre ou poursuivre ladite étape de circulation dudit liquide de nettoyage sur la base dudit signal indiquant la présence de substances polluantes.

16. Procédé selon la revendication 13, comprenant les étapes suivantes:
- avoir une machine (1) pour distribuer du café selon une ou plusieurs des revendications 5 à 9;
- régler le fonctionnement de ladite au moins une pompe (3) et/ou dudit au moins un dispositif de chauffage (6) sur la base dudit signal indiquant des propriétés de ladite crème de café et/ou dudit signal proportionnel à l'extraction du café.

17. Procédé selon la revendication 13, comprenant les étapes suivantes:
- avoir une machine (1) pour distribuer du café selon la revendication 7;
- régler le fonctionnement du dispositif de broyage (11) sur la base dudit signal indiquant des propriétés de ladite crème de café et/ou dudit signal proportionnel à l'extraction du café.

18. Procédé selon une ou plusieurs des revendications 13 à 17, comprenant l'étape de sélection, sur la base dudit signal indiquant des propriétés de ladite crème de café et/ou sur la base dudit signal proportionnel à l'extraction du café, des paramètres optimaux pour le profilage du café et/ou pour le broyage de la poudre de café.
